# DEMANDE DE BREVET EUROPEEN

(11) **EP 1 854 676 A2**
(43) Date de publication de la demande: **14.11.2007**
(21) Numéro de dépôt: 07300900.3
(22) Date de dépôt: 27.03.2007
(51) Int. Cl.: B60R 19/34

(54) **Ensemble d'absorption d'energie et vehicle automobile comportant au moins un tel ensemble**

(30) Priorité: 12.05.2006 FR 0651715
(71) Demandeur: Peugeot Citroen Automobiles SA, 78140 Vélizy-Villacoublay (FR)
(72) Inventeur: Lair, Renaud, 93110, ROSNY SOUS BOIS (FR)

(57) **Abrégé**

L'invention a pour objet un ensemble (1) d'absorption d'énergie, du type comportant une poutre transversale (2) reliée à chaque longeron (3) de la caisse du véhicule par un absorbeur (10), caractérisé en ce que chaque absorbeur (10) est formé par une pièce (11) comportant des moyens de freinage du déplacement de cette pièce (11) dans le longeron (3) lors d'un choc dit piéton et des moyens de blocage de ce déplacement lors d'un choc dit à réparabilité ou d'un choc dit à grande vitesse.

## Description

La présente invention concerne un ensemble d'absorption d'énergie, notamment pour un pare-chocs de véhicule automobile, et un véhicule automobile équipé d'au moins un tel ensemble.

Dans le cadre de la sécurité passive qui concerne l'ensemble des moyens et des actions mises en oeuvre pour diminuer les conséquences d'accidents, les constructeurs automobiles doivent faire face à plusieurs préoccupations majeures.

Une préoccupation consiste à assurer la protection des occupants du véhicule lors d'un choc frontal ou arrière.

Une préoccupation également des constructeurs consiste à maîtriser les coûts de réparation du véhicule lors de chocs dits à réparabilité ou urbain, c'est-à-dire à faible vitesse.

Une autre préoccupation des constructeurs consiste à limiter l'agressivité du véhicule vis-à-vis des autres usagers de la route et notamment des piétons afin de réduire les risques de blessures graves au niveau des jambes de ces piétons.

La conception d'un véhicule doit donc aujourd'hui répondre à de nombreuses réglementations et doit donc subir des procédures d'essais, entre autres, pour les chocs piéton et les chocs à faible vitesse au niveau de la réparabilité.

Le choc dit piéton permet d'estimer les dommages corporels d'un individu en situation de choc sur un véhicule. Pour limiter ces dommages corporels, il est donc nécessaire d'absorber l'énergie cinétique sous un effort limité.

Le choc dit à réparabilité consiste à estimer le coût des réparations sur le véhicule testé, lorsqu'il percute un mur rigide à faible vitesse de l'ordre de 16 km/h.

Pour répondre à ces différentes exigences, les véhicules automobiles sont équipés à l'avant et à l'arrière d'ensembles d'absorption d'énergie qui sont formés par une poutre transversale reliée aux longerons de la caisse du véhicule par au moins un absorbeur. Ces ensembles sont généralement dimensionnés pour le choc dit à réparabilité à environ 16km/h avec un effort de tarage légèrement en dessous de l'effort supporté par la structure du véhicule. Pour le choc dit piéton, l'effort de tarage de l'absorbeur doit être largement inférieur pour ne pas blesser la jambe du piéton en cas de choc.

Dans les ensembles utilisés jusqu'à présent, le choc dit piéton est traité par un autre absorbeur plus souple, généralement unique, et placé sur toute la largeur devant la poutre transversale de pare-chocs. Les deux systèmes, absorbeur piéton et poutre de pare-chocs transversale avec ses absorbeurs reliés à la structure du véhicule, sont en série, c'est-à-dire placés bout à bout.

Cette disposition engendre un encombrement relativement important qui pénalise fortement le porte à faux, notamment à l'avant du véhicule, détériorant ainsi son esthétique.

L'évolution technique des ensembles d'absorption d'énergie est aujourd'hui guidée par deux préoccupations, à savoir celle d'augmenter leurs performances en terme d'absorption d'énergie et celle de donner des dimensions aussi modestes que possible, tout en s'intégrant dans le style du véhicule.

L'invention a pour but de proposer un ensemble d'absorption d'énergie qui permet de satisfaire aux critères de sécurité lors d'un choc dit piéton ainsi que lors d'un choc dit à réparabilité ou d'un choc dit à grande vitesse, tout en permettant de réduire l'encombrement et d'obtenir notamment à l'avant du véhicule un porte à faux court.

L'invention a pour objet un ensemble d'absorption d'énergie, notamment pour un pare-chocs de véhicule automobile, du type comportant une poutre transversale reliée à chaque longeron de la caisse du véhicule par un absorbeur, caractérisé en ce que chaque absorbeur est formé par une pièce comportant des moyens de freinage du déplacement de cette pièce dans le longeron correspondant lors d'un choc dit piéton et des moyens de blocage de ce déplacement lors d'un choc dit à réparabilité ou d'un choc dit à grande vitesse.

Selon d'autres caractéristiques de l'invention:
- la pièce de l'absorbeur est montée dans une platine comprenant un fourreau de guidage de ladite pièce et muni d'un rebord de fixation sur l'extrémité du longeron correspondant,
- les moyens de freinage sont formés par le frottement du fourreau de la platine sur la surface externe de la pièce de l'absorbeur,
- les moyens de freinage sont formés par des ergots ménagés sur la surface interne du fourreau de la platine et destinés à coopérer avec au moins une piste à déformation programmée, ménagée sur la pièce de l'absorbeur,
- les moyens de freinage sont formés par au moins un élément fixe traversant au moins une partie du fourreau de la platine et destiné à coopérer avec une piste à déchirement programmé, ménagée sur la pièce de l'absorbeur,
- les moyens de freinage sont formés par au moins un élément fixe traversant de part en part le fourreau de la platine et la pièce de l'absorbeur et destiné à coopérer avec deux pistes à déchirement programmé opposées, ménagées sur ladite pièce de l'absorbeur,
- ledit au moins élément fixe est formé par au moins un pion ou par une tige,
- les moyens de blocage sont formés par au moins un pion porté par le fourreau de la platine et déplaçable entre une position escamotée et une position active en saillie pénétrant dans un orifice de forme complémentaire ménagé dans la pièce de l'absorbeur, et
- ledit au moins pion est déplaçable par un électroaimant piloté par des moyens de commande et comporte un organe élastique de rappel en position escamotée.

L'invention a également pour objet un véhicule automobile, caractérisé en ce qu'il comprend au moins un ensemble d'absorption d'énergie tel que précédemment mentionné.

L'invention sera mieux comprise à la lecture de la description qui va suivre, donnée à titre d'exemple et faite en référence aux dessins annexés, sur lesquels:
- la figure 1 est une vue schématique en perspective d'un ensemble d'absorption d'énergie conforme à l'invention,
- la figure 2 est une vue schématique de dessus d'un absorbeur disposé entre une poutre transversale et un longeron de la caisse de véhicule automobile, selon un premier mode de réalisation,
- la figure 3 est une vue schématique en coupe longitudinale selon la ligne 3.3 de la figure 2,
- la figure 4 est une vue schématique en coupe longitudinale d'un absorbeur, selon un deuxième mode de réalisation,
- la figure 5 est une vue schématique en coupe longitudinale d'un absorbeur selon un troisième mode de réalisation,
- la figure 6 est une vue schématique de dessus de l'absorbeur de la figure 5,
- la figure 7 est une vue schématique en coupe longitudinale selon la ligne 7.7 de la figure 2 et montrant les moyens de blocage de l'absorbeur, en position escamotée, et
- la figure 8 est une vue analogue à la figure 7 montrant les moyens de blocage de l'absorbeur en position active.

Dans la description qui suit, les orientations utilisées sont les orientations habituelles d'un véhicule automobile et les termes « avant » et « arrière » s'entendent par rapport au sens de la marche du véhicule automobile.

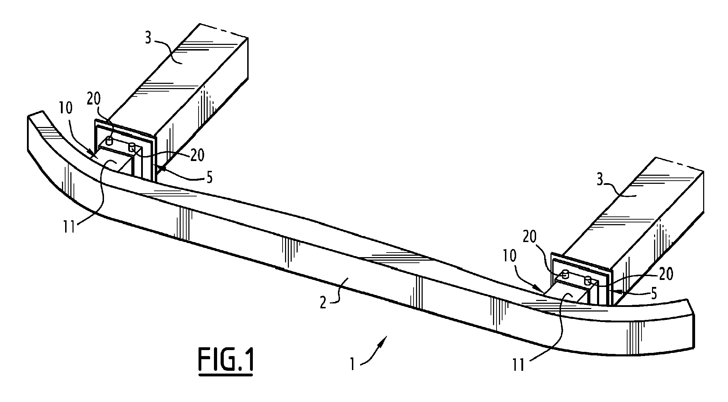

Sur la figure 1, on a représenté schématiquement un ensemble d'absorption d'énergie désigné par la référence générale 1, notamment pour un pare-chocs de véhicule automobile, et qui comporte une poutre transversale 2 reliée à chaque longeron 3 de la caisse du véhicule par un absorbeur désigné dans son ensemble par la référence 10.

Chaque longeron 3 est formé par un corps creux présentant, dans l'exemple de réalisation représenté sur les figures, une section en forme de carré. La section de chaque longeron 3 peut être rectangulaire ou présenter une autre forme. L'extrémité avant de chaque longeron est pourvue d'une plaque destinée à recevoir une platine 5.

D'une manière générale, chaque absorbeur 10 est formé par une pièce 11 présentant une section externe de forme conjuguée ou non à la section interne du longeron 3 correspondant et comportant des moyens de freinage du déplacement de cette pièce dans le longeron lors d'un choc dit piéton et des moyens de blocage de déplacement lors d'un choc dit à réparabilité ou d'un choc dit à grande vitesse.

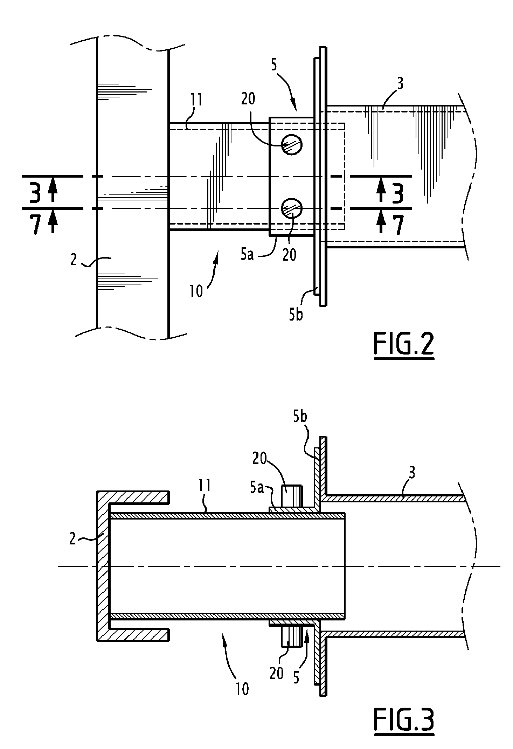

En se reportant maintenant aux figures 2 à 8, on va décrire différentes variantes des moyens de freinage et des moyens de blocage de la pièce 11 pour un absorbeur 10, les moyens de freinage et de blocage pour l'autre absorbeur 10 étant identiques.

Ainsi que montré sur ces figures, la pièce 11 de l'absorbeur 10 est montée dans la platine 5 qui comporte, à cet effet, un fourreau 5a de guidage de la pièce 11 et un rebord 5b de fixation sur l'extrémité avant du longeron 3 correspondant.

Selon un premier mode de réalisation représenté sur les figures 2 et 3, les moyens de freinage du déplacement de la pièce 11 dans le longeron 3 lors d'un choc dit piéton à une vitesse comprise entre 20 et 50Km/h sont formés par le frottement de la surface interne du fourreau 5a de la platine 5 sur la surface externe de cette pièce 11. Bien évidemment, la pièce 11 présente une section de forme conjuguée à la section de la surface interne du fourreau 5a de la platine 5.

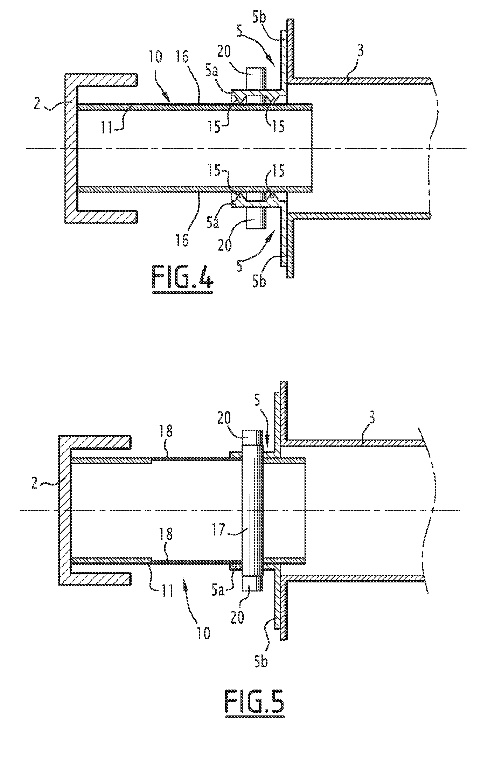

Selon un second mode de réalisation représenté à la figure 4, l'effort de résistance au coulissement de la pièce 11 de l'absorbeur 10 est obtenu par des ergots 15 disposés sur la surface interne du fourreau 5a de la platine 5 et uniformément répartis sur le pourtour de la pièce 11. De préférence, ces ergots 15 sont fusibles et sont en contact avec un revêtement spécifique déposé sur la surface externe de la pièce 11 de l'absorbeur 10. Chaque série d'ergots est destinée à coopérer avec une piste 16 à déformation programmée ménagée sur la surface externe de la pièce 11 de l'absorbeur 10.

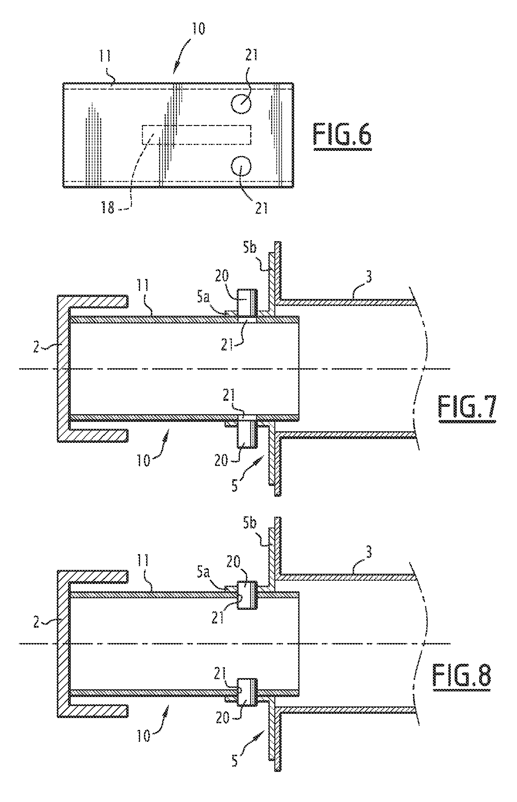

Selon un troisième mode de réalisation représenté à la figure 5, les moyens de freinage de la pièce 11 de l'absorbeur 10 lors d'un choc dit piéton, sont formés par au moins un élément 17 fixe traversant au moins une partie du fourreau 5a de la platine 5 et destiné à coopérer avec une piste 18 à déchirement programmée ménagée sur la pièce 11 de l'absorbeur 10.

De préférence et ainsi que montré sur cette figure 5, l'élément 17 fixe est formé par une tige qui traverse de part en part le fourreau 5a de la platine 5 et qui coopère avec deux pistes 18 ménagées sur deux faces opposées de la pièce 11.

Selon une variante, l'élément 17 fixe peut être constitué par deux pions opposés coopérant chacun avec une piste 18 ménagée sur une face de la pièce 11. Chaque piste 18 est formée par une zone de moindre épaisseur s'étendant dans l'axe longitudinal de la pièce 11.

Dans le cas d'un choc dit piéton, la pièce 11 de l'absorbeur 10 se déplace sous l'effet de la poussée exercée par la traverse 12 dans le longeron 3 correspondant et l'élément 17 fixe déchire chaque piste 18 ce qui engendre un effort de résistance très faible pour le piéton.

Pour un maximum d'énergie lors d'un choc dit à réparabilité, c'est-à-dire pour une vitesse du véhicule inférieure à 20 km/h ou lors d'un choc dit à grande vitesse, c'est-à-dire pour une vitesse supérieure à 50 km/h, les moyens de blocage du coulissement de la pièce 11 de l'absorbeur 10 sont formés par au moins un pion 20 porté par le fourreau 5a de la platine 5 et, de préférence, par plusieurs pions 20 portés par ledit fourreau, répartis sur toute la surface de cette pièce 11 afin de répartir l'effort important lors de tels chocs, sur la platine 5.

Ainsi que montré sur les figures 7 et 8, les pions 20 sont déplaçables entre une position escamotée (figure 8) permettant le coulissement de la pièce 11 de l'absorbeur 10 dans le longeron 3 lors d'un choc dit piéton et une position active en saillie (figure 7) empêchant le coulissement dans cette pièce 11 lors d'un choc dit à réparabilité ou lors d'un choc dit à grande vitesse. Dans cette position active, chaque pion 20 pénètre dans un orifice 21 (figure 6) de forme complémentaire audit pion 20 et ménagé dans la paroi de la pièce 11 de l'absorbeur 10.

Chaque pion 20 peut présenter une section par exemple circulaire, carrée ou rectangulaire ou encore ovale et il peut y avoir plusieurs pions pour chaque face de la pièce 11 de l'absorbeur 10.

Chaque pion 20 est déplaçable par exemple par un électroaimant piloté par des moyens de commande et comporte un organe élastique, non représenté, de rappel en position escamotée. Le pilotage des pions 20 pour les déplacer entre la position escamotée et la position active peut être effectué de différentes façons, comme par exemple uniquement par l'information sur la vitesse du véhicule ou par une détection active qui détermine avant le choc la configuration de l'absorbeur 10 pour satisfaire un choc dit piéton ou un choc dit à réparabilité ou dit à grande vitesse.

Ainsi, lors d'un choc dit piéton, l'absorbeur 10 translate dans le longeron 3 sous un effort engendré, soit par le frottement du fourreau 5a sur la surface externe de la pièce 11 de l'absorbeur 10, soit par déformation ou déchirement d'au moins une piste 1 et lors d'un choc dit à réparabilité ou dit à grande vitesse, l'absorbeur 10 qui doit absorber un maximum d'énergie, est bloqué en translation et cette absorption d'énergie se fait par l'écrasement de la pièce 11 selon son axe.

L'ensemble d'absorption d'énergie selon l'invention peut être monté à l'avant du véhicule et il permet de satisfaire aux différentes exigences lors d'un choc, tout en réduisant le porte à faux, notamment à l'avant du véhicule. A titre d'exemple, le gain en encombrement est au minimum de 60 mm par rapport aux ensembles d'absorption d'énergie classiques.

## Revendications

1. Ensemble d'absorption d'énergie, notamment pour un pare-chocs de véhicule automobile, du type comportant une poutre transversale (2) reliée à chaque longeron (3) de la caisse du véhicule par un absorbeur (10), **caractérisé en ce que** chaque absorbeur (10) est formé par une pièce (11) comportant des moyens de freinage du déplacement de cette pièce dans le longeron (3) lors d'un choc dit piéton et des moyens (20, 21) de blocage de ce déplacement lors d'un choc dit à réparabilité ou d'un choc dit à grande vitesse.

2. Ensemble selon la revendication 1, **caractérisé en ce que** la pièce (11) de l'absorbeur (10) est montée dans une platine (5) comprenant un fourreau (5a) de guidage de la pièce (11) et muni d'un rebord (5b) de fixation sur l'extrémité du longeron (3) correspondant.

3. Ensemble selon la revendication 1 et 2, **caractérisé en ce que** les moyens de freinage sont formés par le frottement du fourreau (5a) de la platine (5) sur la surface externe de la pièce (11) de l'absorbeur (10).

4. Ensemble selon la revendication 1 et 2, **caractérisé en ce que** les moyens de freinage sont formés par des ergots (15) ménagés sur la surface interne du fourreau (5a) de la platine (5) et destinés à coopérer avec au moins une piste (16) à déformation programmée, ménagée sur la pièce (11) de l'absorbeur (10).

5. Ensemble selon la revendication 1 et 2, **caractérisé en ce que** les moyens de freinage sont formés par au moins un élément (17) fixe traversant au moins une partie du fourreau (5a) de la platine (5) et destinés à coopérer avec une piste (18) à déchirement programmé, ménagée sur la pièce (11) de l'absorbeur (10).

6. Ensemble selon la revendication 1 et 2, **caractérisé en ce que** les moyens de freinage sont formés par au moins un élément (17) fixe traversant de part en part le fourreau (5a) de la platine (5) et la pièce (11) de l'absorbeur (10), et destiné à coopérer avec deux pistes (18) à déchirement programmé opposées, ménagées sur ladite pièce (11) de l'absorbeur (10).

7. Ensemble selon la revendication 6, **caractérisé en ce que** ledit au moins élément (15) fixe est formé par au moins un pion ou une tige.

8. Ensemble selon la revendication 1 et 2, **caractérisé en ce que** les moyens de blocage sont formés par au moins un pion (20) porté par le fourreau (5a) de la platine (5) et déplaçable entre une position escamotée et une position active en saillie pénétrant dans un orifice (21) de forme complémentaire ménagé dans la pièce (11) de l'absorbeur (10).

9. Ensemble selon la revendication 8, **caractérisé en ce que** ledit au moins pion (20) est déplaçable par un électroaimant piloté par des moyens de commande et comporte un organe élastique de rappel en position escamotée.

10. Véhicule automobile, **caractérisé en ce qu'**il comporte au moins un ensemble (1) d'absorption d'énergie selon l'une quelconque des revendications précédentes.
